(19) Europäisches Patentamt

**European Patent Office**

**Office européen des brevets**

(11) Publication number: **0 343 655 B1**

(12) **EUROPEAN PATENT SPECIFICATION**

(45) Date of publication of patent specification: **10.11.93** (51) Int. Cl.⁵: **H02K 41/02, H02K 16/00**

(21) Application number: **89109423.7**

(22) Date of filing: **24.05.89**

(54) **Linear driving apparatus.**

(30) Priority: **26.05.88 JP 129982/88**
**30.08.88 JP 217276/88**
**30.11.88 JP 304357/88**

(43) Date of publication of application:
**29.11.89 Bulletin 89/48**

(45) Publication of the grant of the patent:
**10.11.93 Bulletin 93/45**

(84) Designated Contracting States:
**DE FR GB**

(56) References cited:
**FR-A- 2 510 838**
**US-A- 2 782 328**
**US-A- 3 376 578**
**US-A- 3 787 716**
**US-A- 3 909 643**

**PATENT ABSTRACTS OF JAPAN, vol. 7, no. 190 (E-194)[1335], 19th August 1983; & JP-A-58 93 461**

(73) Proprietor: **SHARP KABUSHIKI KAISHA**
**22-22 Nagaike-cho**
**Abeno-ku**
**Osaka 545(JP)**

(72) Inventor: **Ueda, Tetuyuki**
**2-2-7, Sakuragaoka**
**Kanmaki-cho**
**Kitakatsuragi-gun Nara-ken(JP)**
Inventor: **Tsunezawa, Masayoshi**
**1-13, Niwashirodai 3-cho**
**Sakai-shi Osaka-fu(JP)**

(74) Representative: **Selting, Günther, Dipl.-Ing. et al**
**Patentanwälte**
**von Kreisler, Selting, Werner**
**Postfach 10 22 41**
**D-50462 Köln (DE)**

Rank Xerox (UK) Business Services
(3.10/3.6/3.3.1)

EP 0 343 655 B1

## Description

The present invention generally relates to a linear driving apparatus using two units of linear motors with the rotors being coupled to each other, and more particularly, to a linear driving apparatus most suitable to effect the positioning operation and speed controlling operation of higher accuracy.

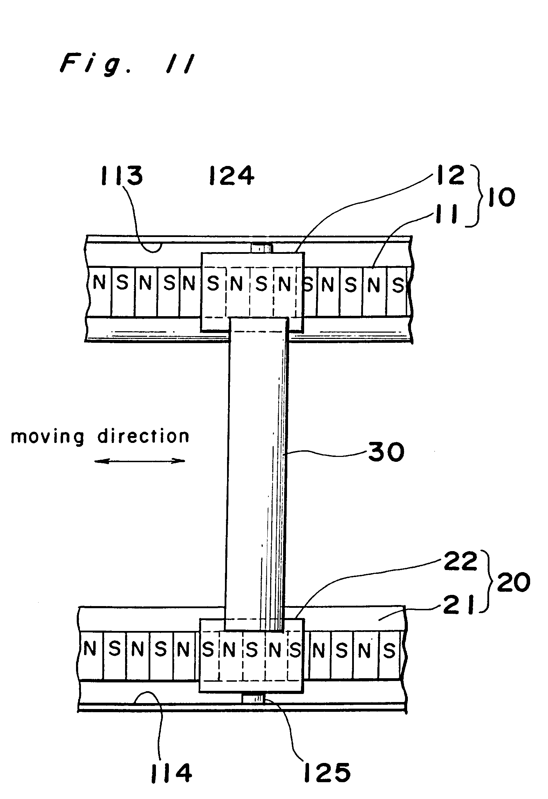

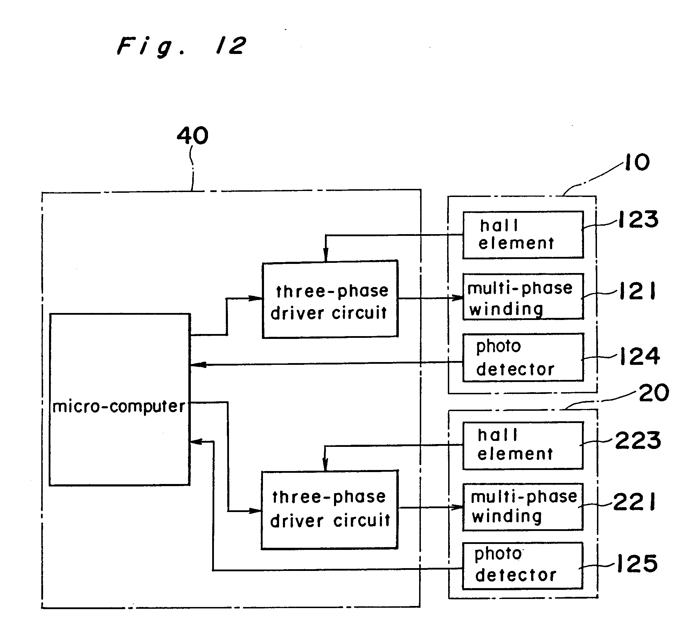

Fig. 11 is a plan view showing the appearance of a linear driving apparatus having been designed previously by the inventers, while Fig. 12 is an electric block diagram of the linear driving apparatus. In the previous design of Figs. 11 and 12, there are provided two units of linear motors 10, 20, which are three-phase brushless linear motors. By the independent speed controlling operation of the linear motors 10, 20, the stators 12, 22 coupled by a coupling member 30 which may move freely, with the gap being open, with respect to the stators 11, 21 are basically to be driven in a driving direction as shown in the drawing. In further detail, photo detectors 124, 125 corresponding to linear scales 113, 114 pasted on the sides of the stators are provided respectively on the sides of the coupled rotors 12, 22. The signals transmitted from the photo detectors 124, 125 as the positional information of the rotors 11, 12 are introduced into a linear motor portion 40 mainly composed of micro-computers. The impellent force to be caused by the rotors 12, 22 are adjusted independently by the linear motor control portion 40 so that a moving object (not shown) secured on the rotors 12, 22 is to move at a predetermined speed. Polyphase windings 121, 221 are secured on the reverse faces of the rotors 12, 22, and further hall elements 123, 223 for detecting the magnetic poles of the magnetic flux to be transmitted from the stators 11, 21 are secured thereon so as to give to the linear motor control portion 40 the timings of the polyphase excitation in the polyphase windings 121, 221.

However, in the above-described conventional embodiment, as the linear motor 10 and the linear motor 20 are adapted to effect independent controlling operations, the linear motor controlling portion 40 is inevitably required to be made more complicated, advanced, with a considerable number of components such as photo detectors 124, hall elements 123, etc. being required, thus causing large obstacles in promotion of the lower apparatus cost. Some differences in the impellent force to be caused in the linear motors 10, 20 may cause the moving object to be yawed. Particularly, when the positioning controlling and speed controlling operations of the higher accuracy are effected, some differences in the impellent force become large disturbance factors in the control system.

US-A-3 787 716 discloses a linear D.C. motor for use in a vehicle guideway system. The linear motor comprises a stator consisting of a pair of parallel side rails and inbetween the parallel rails a two-part divided linear rotor. On the inner face of each rail, there is a series of uniformly spaced and sized magnets of alternate polarity in that way that the magnets on one rail are of the same polarity as opposing magnets on the other rail. Each rotor has conductor coils, wherein every sixth conductor coils of both rotors are series connected. Motor movement is developed by energizing the coil conductors and creating a flux field between the rotor and the magnets. The rotor also carry Hall sensors to determine the presence of a field of the magnets placed on the inner face of each rail.

FR-A-2 510 838 discloses an electrical linear motor for two-dimensional movements, wherein two linear advancing motors are superposed, each motor being for movement along one of two orthogonal axes. Each one of these motors comprises a rotor with windings which is divided in two parts which parts are interconnected by an elongated coupling member.

It is the object of the invention to provide an improved linear driving apparatus, which is capable of effecting the higher accuracy of controlling operation together with the lower cost of the apparatus.

This problem is solved with the features of claim 1.

Accordingly, the polyphase windings of the same phase in the respective rotors of the first and second linear motors are connected in series or in parallel so that the polyphase currents flowing into the respective rotors become equal with respect to each other. The impellent forces of the rotors therefore act simultaneously, so that the moving object is not caused to be yawed. An individual control by photodetectors and Hall elements is only necessary for one rotor.

By ringconnecting the polyphase windings as the whole, it is possible to provide a linear driving apparatus which is able to increase the impellent force without any rise in power voltage.

The invention will be explained in detail by the following description with reference to the accompanying drawings, wherein

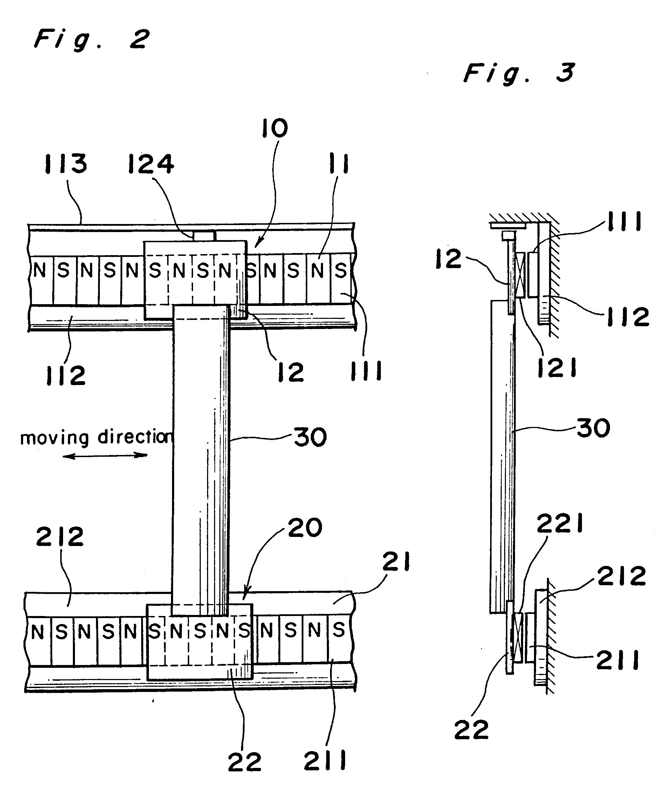

Fig. 1 through Fig. 7 show a first embodiment in a linear driving apparatus in accordance with the present invention;

Fig. 1 is a perspective view showing the simplified construction view of the linear driving apparatus;

Fig. 2 is a plan view of the linear driving apparatus;

Fig. 3 is a side sectional view thereof;

Fig. 4 is a simplified side view of a linear motor;

Fig. 5 is a reverse face view of a rotor;

Fig. 6 is an electrical block diagram of the linear driving apparatus;

Fig. 7 is a connection view of polyphase windings in the linear motor;

Fig. 8 is a connection view of polyphase windings showing in a modified embodiment of Fig. 7;

Fig. 11 and Fig. 12 are views for illustrating a linear driving apparatus of previous design, with Fig. 11 being a plan view equivalent to that of Fig. 2, and Fig. 12 being an electric block diagram equivalent to that of Fig. 6;

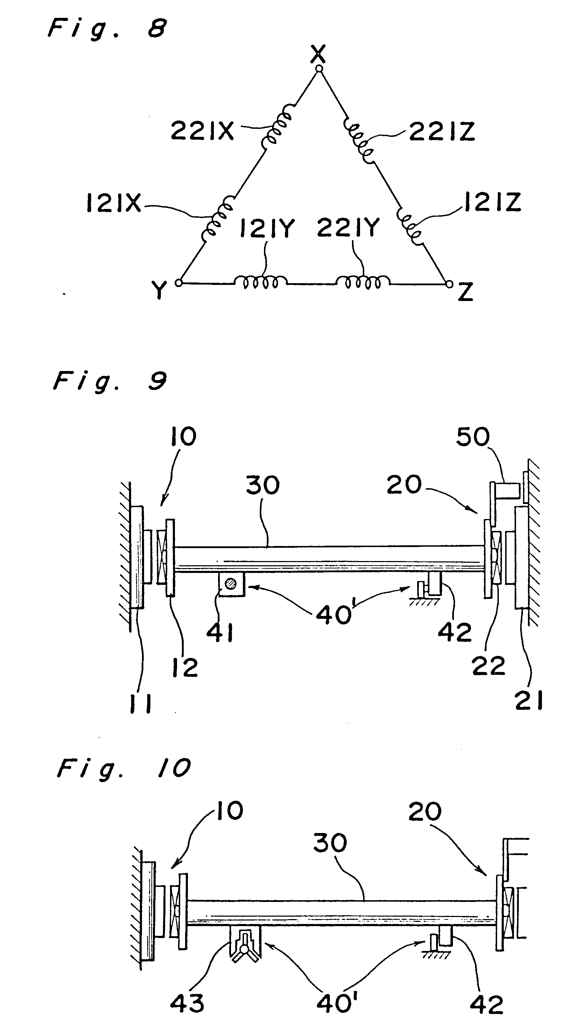

Fig. 9 and Fig. 10 are views each for illustrating the second embodiment of the linear driving apparatus in accordance with the present invention, with Fig. 9 being a side view of the linear driving apparatus, and Fig. 10 being a view equivalent to that of Fig. 9 showing the modified embodiment of the guide member.

## DETAILED DESCRIPTION OF THE INVENTION:

Before the description of the present invention proceeds, it is to be noted that like parts are designated by like reference numerals throughout the accompanying drawings.

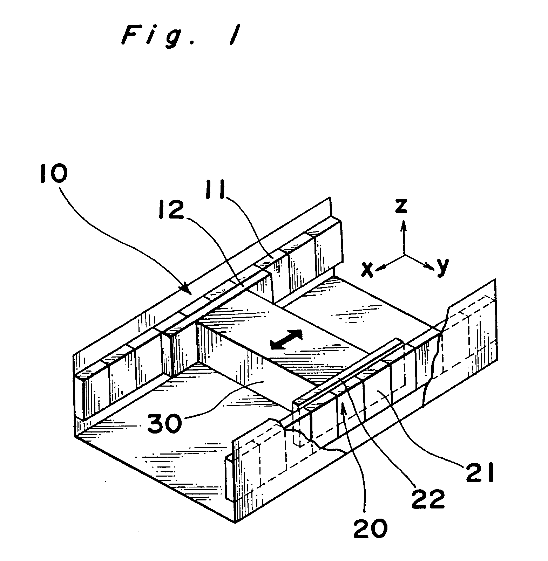

Referring now to the drawings, there is shown in Fig. 1, a linear driving apparatus according to one preferred embodiment of the present invention, which includes two units of linear motors 10, 20 as three-phase brushless linear motors, with the rotors 12, 22 being coupled to each other by a rigid coupling member 30. A moving object (not shown) secured onto the top face of the coupling member 30 is adapted to be alternately moved in a direction shown in the drawing through the controlling of the impellent force to be caused in the linear motors 10, 20 by a microcomputer.

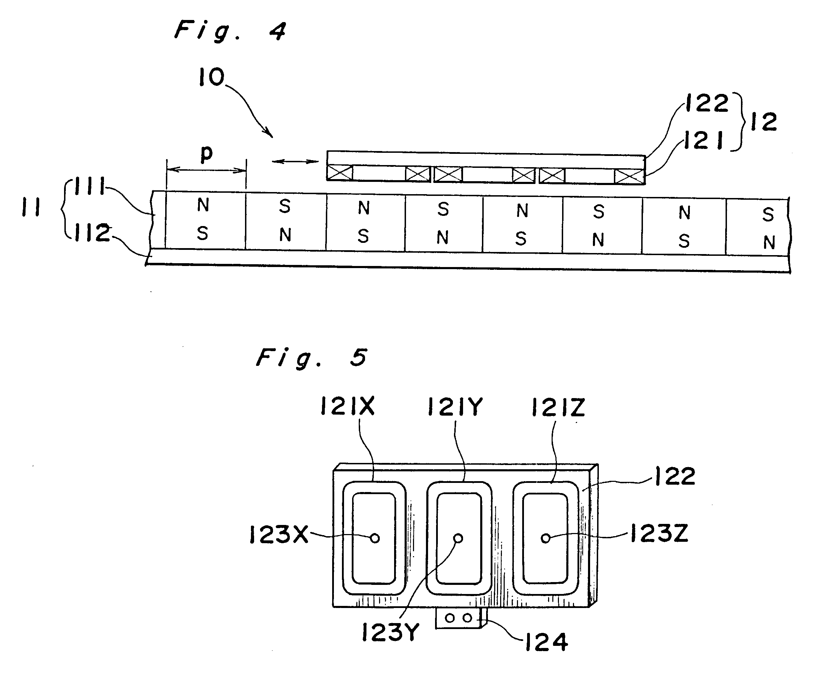

The mechanical construction of the linear driving apparatus will be described hereinafter. A linear motor 10 equivalent to a first linear motor is composed of a stator 11 with a plurality of permanent magnets 111 being alternately magnetized on the top face of the stator heel piece 112 as shown in Fig. 4, and a rotor 12 with a polyphase windings 121 secured onto the under face of the rotor heel piece 122. The rotor 12 is freely movable at a given interval with respect to the magnet faces of the stator 11 by a guide not shown. The hall elements 123X, 123Y, 123Z which are magnetic detection elements for excitation change-over detection use are secured into the respective central positions of air-core coils 121X, 121Y, 121Z provided in parallel as the polyphase windings 121 as shown in Fig. 5. Furthermore, a photo detector 124 of a reflection type is secured on the side face of the rotor 12. The lights transmitted from the photo detector 124 are reflected, received by a linear scale (not shown) disposed on the side of the stator of the linear motor 10 so that the positional detection of the mutually coupled rotors 12, 22 is adapted to be effected. It is to be noted that the magnetic pole pitch p of the permanent magnet 111 in the stator 11 is established at three fourth magnification with respect to the pitch interval of the air-core coils 121X, 121Y, 121Z in the rotor 12.

The linear motor 20 equivalent to a second linear motor is the same in construction as the above-described linear motor 10 with the exception that the linear motor 20 is not equipped with hall elements 123X, 123Y, 123Z, a photo detector, etc.. The air-core coils 221X, 221Y, 221Z as the polyphase windings 221 correspond to the air-core coils 121X, 121Y, 121z as the polyphase windings 121. Although not shown, cables, etc. are drawn out from the rotors 12, 22 and are guided onto the linear motor control portion 40 to be described later.

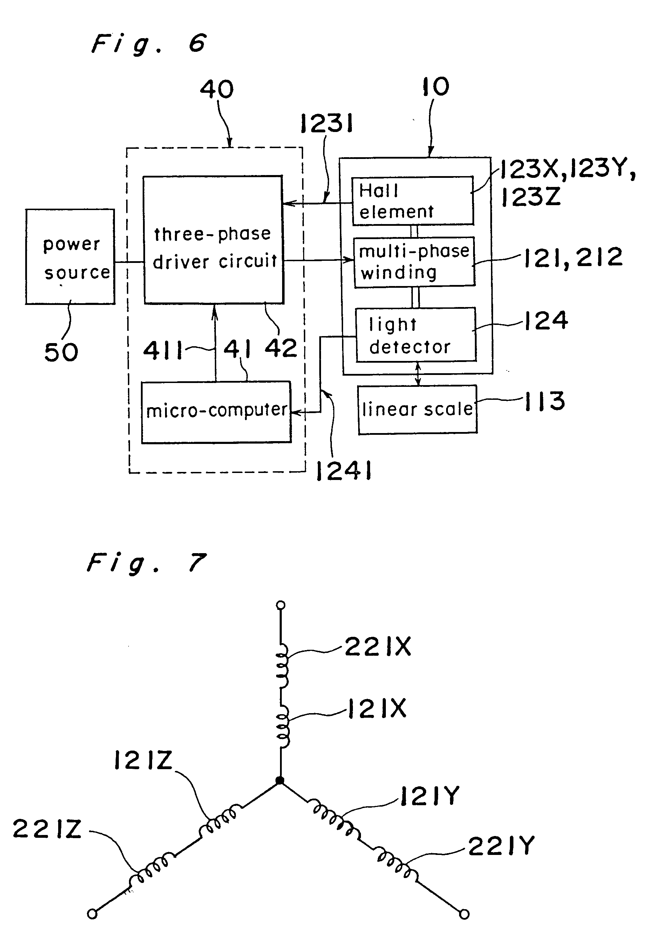

The electric construction of the linear driving apparatus will be described hereinafter with reference to Fig. 6.

The linear motor control portion 40 is a control circuit mainly composed of a microcomputer 41 named so-called software survo. Three-phase excitation current to be fed into the polyphase windings 121, 221 are generated in accordance with the positional information or the like of the rotors 12, 22 obtained by the positional detection signals 1241 of the photo detector 124 so as to control the impellent force to be generated in the linear motors 10, 20. In further detail, the microcomputer 41 successively compares the positional data of the rotors 12, 22 the positional detecting signals 1241 give with the predetermined, inputted instruction values so as to generate the PWM signals 411 in accordance with the compared results so that the PWM signals 411 are adapted to be outputted into the three-phase driver circuit 42 as the speed orders of the rotors 12, 22. Furthermore, in addition to the PWM signals 411, the magnetic-pole detection signals 1231 from the hall elements 123X, 123Y, 123Z are introduced into the three-phase driver circuit 42. The magnetic-pole detection signals 1231 give the polarity information of the magnetic flux transmitted from the interlinking stator 11 into the air-core coils 121X, 121Y, 121Z of the rotor 12. The oscillation is effected in accordance with the speed instruction information through the PWM signals 411 and the polarity information through the magnetic-pole detection signals 1231 in the three-phase driver circuit 42, so that the driving currents corresponding to the duty ratio of the switching signals obtained are adapted to be fed respectively into the polyphase windings 121, 221.

The connection system of the polyphase windings 121, 212 in the rotor 12, the stator 22 will be described hereinafter with reference to Fig. 7.

The air-core coils 121X, 121Y, 121Z in the polyphase windings 121 are Y-connected as shown, with the air-core coils 221X, 221Y, 221Z in the polyphase windings 221 are respectively connected in series for each phase.

Accordingly, in the linear driving apparatus in the present embodiment, the inner construction of the linear motor control portion 40 is simplified, and also, the hall element 123, the photo detector 124, etc. may be omitted by one unit only. As the polyphase windings 121, 221 in the rotor 12, the rotor 22 are connected in series for each phase, the respective phase currents flowing respectively into the polyphase windings 121, 221 become the same if the other conditions are the same, the impellent force to be caused respectively as the motor 10, 20 become the same. Therefore, yawing is not caused in the rotor 12, the rotor 22 coupled by the coupling member 30 so as to ensure the smooth driving operation of the moving object.

The linear driving apparatus in the present invention is not restricted to the above-described embodiment. For example, when the polyphase windings are Δ connected in the first linear motor, the respective phases of the polyphase windings in a second linear motor with respect to the respective phases of the polyphase windings may be provided in shape so as to be connected in parallel, with the same effect being provided even in this case. Also, it is needless to say that the polyphase windings may be ones except for the three phase windings.

The connection system of the polyphase windings in the rotors 12, 22 in Fig. 8 will be described as a modified embodiment of Fig. 7.

In the polyphase windings 121, 221 in the rotors 12, 22, the air-core coil 121X and air-core coil 221X of the same phase are connected in series. Also, the air-core coil 121Y and the air-core coil 221Y are connected in series, and the air-core coil 121Z and the air-core coil 221Z are similarly connected in series, with the connection system to be Δ connected as the whole. However, when the connection system is changed into the Δ connection from the Y-connection, the currents flowing into the polyphase windings 121, 221 become larger as described hereinafter, so that it is required to make the wire such as the air-core coil 121 larger in diameter for safety measure.

The principle on which the impellent force to be caused in the linear motors 10, 20 may be increased by a linear driving apparatus of such a construction as described hereinabove will be described as compared with the conventional example.

Suppose three-phase power voltage to be fed from the linear motor control portion 40 is the same in magnitude in not only the conventional embodiment, but also the present embodiment, with the phase voltage thereof being V.

When the polyphase windings 121, 221 are of a Y-combined connection system as shown in Fig. 7, the currents flowing into the polyphase windings 121, 221 from the X phase to the Y phase are assumed I1 (I11). When they are of a Δ-combined connection system of the present embodiment as shown in Fig. 7, the currents flowing from the X phase to the Y phase are assumed to I2 (I22). In the above-described case, the following relation formula is provided, because the resistance values r of the respective air-core coils 121 are all the same.

$$(I1/I2) = 2 \qquad (1)$$

This formula is a relation one between the current I1 and the current I2 in disregard of counter electromotive forces v to be caused in the respective air-core coils 121 during the operation. The relation formulas between the current I1 and I2, considering the counter electromotive forces v, are as follows.

$$I11 = I1 - ( v / r )$$
$$I22 = I2 - ( v / r )$$
$$(I11/ I22) = 2 + v ( I2 \cdot r - v )$$
$$> 2 \qquad (2)$$

Accordingly, in the case of the present embodiment, as the currents flowing into the polyphase windings 121, 221 become double or more, the impellent force increase of two times or more may be effected in principle. As the impellent force to be caused in the liner motors 10, 20 are equal, it is possible to effect the smooth driving operation of the rotors 12, 22 without the production of the yawing. As the above-described advantages are provided only through the change in the connection system, with great significance that the linear driving apparatus of higher positioning accuracy and lower price may be manufactured and developed.

In the second embodiment shown in Fig. 9 and Fig. 10 as a modified embodiment of Fig. 1, the linear driving apparatus is equipped on a duplicating apparatus of an electronic photograph system and moves alternately in the document scanning direction an optical mechanism (not shown) composed of a reflection mirror and a light source (lamp) by the linear motors 10, 20 (equivalent to the first, second linear motors). The optical mechanism is secured onto the top portion of the coupling member 30 which couples the rotors 12, 22 in the linear motors 10, 20 to each other, with a guide member 40' for axially supporting the rotors 12, 22 being provided under the coupling member 30. Also, the rotors 12, 22 in the linear motors 10, 20 are respectively disposed sideways on both the end faces of the coupling member 30. The stators 11, 21 in the linear motors 10, 20 stand vertically with a given gap with respect to the rotors 12, 22. It is to be noted that an encoder 50 for detecting the moving position of the local mechanism is provided above the rotor 22.

Namely, the gap between the stators 11 and 21 in the linear motors 10, 20 and the gap between the rotors 12 and 22 are to be regulated in space by the guide members 40'. The guide member 40' is composed of a slide bearing 41 and a rolling bearing 42 respectively disposed on both the under sides of the coupling member 30 (see Fig. 9), so that the sliding load does not become too big, and magnetic suction force to be described later is adapted to be absorbed. Fig. 10 shows a modified embodiment of the guide member 40'. Namely, such a slide bearing 43 as to combine the slide bearing with the rolling bearing is provided on the left side in the drawing in the lower portion of the coupling member 40'. The slide bearing 43 is constructed so that the wheel which may come into contact against the pipe is provided by three in total on the side of the coupling member.

Although in the construction of the linear motor 20, the driving force required to move the optical mechanism is to be produced by the linear motors 10, 20, the magnetic suction force of two through three times the driving force exists between the stators 11, 21 and the rotors 12, 22. In the linear driving apparatus in the present embodiment, the magnetic suction force is adapted not to have direct action upon the guide member 40'. The principle therefor will be described hereinafter.

Although the magnetic suction force to be generated in the linear motor 10 and the magnetic suction force to be generated in the linear motor 20 are not always equal, the direction thereof is opposite to each other in the arrangement construction of the linear motors 10, 20 so as to negate the mutual forces. Accordingly, only the difference between the magnetic suction forces to be caused in the linear motors 10, 20 has the action upon the guide member 40'. Therefore, the construction of the guide member 40' may be made much simpler and the friction force to be caused by the guide member 40' may be reduced considerably. Also, the substantial driving forces of the linear motors 10, 20 may be increased by the reduction portion of the friction forces. Furthermore, the optical mechanism may be smoothly moved, with no possibility that the slide bearing 41 is bent. Thus, the reliability of the guide member 40' may be considerably improved. The above-described merit may be enjoyed even when the driving forces of the linear motors 10, 20 are set higher, with great significance that the higher speed may be effected without reduction in the performance of the duplicating apparatus. Also, the horizontal width of the linear driving apparatus may be made shorter in the arrangement construction of the linear motors 10, 20, with a merit that the duplicating apparatus may be designed compacter.

It is to be noted that the linear driving apparatus of the present invention is not restricted to the application of the duplicating only.

When the linear driving apparatus of the present invention is used, the first, second linear motors which are coupled in shape by the coupling member are not controlled independently, but the impellent force to be caused in them are adapted to be constructed the same. Therefore, the construction of the apparatus is considerably simplified and the cost thereof may be reduced, with great significance that the positioning control and speed control of higher accuracy may be effected better.

Also, when the linear driving apparatus of the present invention is used, the currents flowing into it are adapted to be drawn by a large amount only through the ring connection of the polyphase windings in the connecting system. Therefore, the impellent force to be caused in the linear motor may be increased considerably without any increase in the line voltage of the power supply for feeding the power to the linear motor. Furthermore, as the impellent force to be caused in the first, second liner motors become equal in the connection system, the smooth driving operation may be realized without the generation of the yawing. Therefore, it is significant in the production, development of the linear driving apparatus of lower cost and higher performance.

Furthermore, when the linear driving apparatus of the present invention is used, the magnetic suction forces to be caused respectively in the first, second linear motors are adapted to be mutually negated, so that the magnetic suction forces to be caused in the first, second liner motors do not have direct action upon the guide member. Thus, the frictional forces in the guide members may be made considerably small and the substantial driving forces in the first, second liner motors may be set higher. Also, it is very significant in the promotion of the higher speed without the reduction in the performance as the apparatus, because the rigid guide member is not required to be used, and the guide member becomes higher in reliability.

## Claims

1. Linear driving apparatus comprising
    a first and a second linear motor (10,20),

stators (11,21) of the first and second motors (10,20), each stator having a plurality of permanent magnets (111,211),

rotors (12,22) of the first and second motors (10,20), each rotor having polyphase windings (121,221), the rotors (12,22) being driven through the polyphase excitation of the polyphase windings (121,221) in the first and second motors (10,20),

a coupling member (30) for mutually coupling the rotors (12,22) in the first, second linear motor (10,20),

**characterized in that**

the polyphase windings (121,221) of the same phase in the respective rotors (12,22) of the first and second motors (10,20) are connected with each other in series or in parallel, and that Hall elements (123) for detecting the magnetic poles of the magnetic flux being transmitted from the stators (11,21) are secured only to one of the rotors (12,22) of the first and second motors (10,20).

2. Linear driving apparatus according to claim 1, characterized in that the polyphase windings (121,221) are ringconnected as the whole.

3. Linear driving apparatus according to claim 1 or 2, characterized in that the rotors (12,22) are freely movable through a gap on the top surface of the stators (11,21).

4. Linear driving apparatus according to claim 1 or 2, characterized in that the stators (11,21) in the first and second linear motors (10,20) are disposed vertically, that the rotors (12,22) are respectively disposed on both end portions of the coupling member (30) and that a guide member (40') is provided for axially supporting the coupling member (30) or the rotors (12,22).

**Patentansprüche**

1. Lineare Antriebsvorrichtung mit
einem ersten und einem zweiten Linearmotor (10, 20),
Statoren (11,21) des ersten und des zweiten Motors (10,20), wobei jeder Stator mehrere Dauermagneten (111,211) aufweist,
Rotoren (12,22) des ersten und des zweiten Motors (10,20), wobei jeder Rotor Mehrphasenwicklungen (121,221) aufweist und die Rotoren (12, 22) durch die Mehrphasenerregung der Mehrphasenwicklungen (121,221) in dem ersten und dem zweiten Motor (10,20) angetrieben werden,
einem Kopplungsteil (30) zur gegenseitigen Kopplung der Rotoren (12,22) in dem ersten und dem zweiten Linearmotor (10,20),
**dadurch gekennzeichnet,**
daß die gleichphasigen Mehrphasenwicklungen (121,221) in den jeweiligen Rotoren (12,22) des ersten und des zweiten Motors (10,20) in Reihe oder parallel miteinander verbunden sind, und daß Hall-Elemente (123) zum Detektieren der Magnetpole des von den Statoren (11,21) übertragenen Magnetflusses nur an einem der Rotoren (12, 22) des ersten und des zweiten Motors (10, 20) befestigt sind.

2. Lineare Antriebsvorrichtung nach Anspruch 1, dadurch gekennzeichnet, daß die Mehrphasenwicklungen (121,221) als ganzes ringförmig verbunden sind.

3. Lineare Antriebsvorrichtung nach Anspruch 1 oder 2, dadurch gekennzeichnet, daß die Rotoren (12, 22) frei durch einen Spalt an der Oberseite der Statoren (11,21) beweglich sind.

4. Lineare Antriebsvorrichtung nach Anspruch 1 oder 2, dadurch gekennzeichnet, daß die Statoren (11,21) in dem ersten und dem zweiten Linearmotor (10,20) vertikal angeordnet sind, daß die Rotoren (12,22) jeweils an beiden Endteilen des Kopplungsteils (30) angeordnet sind und daß ein Führungsteil (40') zum axialen Halten des Kopplungsteils (30) oder der Rotoren (12,22) vorgesehen ist.

**Revendications**

1. Dispositif d'entraînement linéaire comprenant un premier et un second moteurs linéaires (10, 20), des stators (11, 21) des premier et second moteurs (10, 20), chaque stator ayant une pluralité d'aimants permanents (111, 211),
des rotors (12, 22) des premier et second moteurs (10, 20), chaque rotor ayant des enroulements polyphasés (121, 221), les rotors (12, 22) étant entraînés par l'intermédiaire de l'excitation polyphasée des enroulements polyphasés (121, 221) dans les premier et second moteurs (10, 20),
un élément de liaison (30) pour relier mutuellement les rotors (12, 22) dans les premier et second moteurs linéaires (10, 20),
caractérisé en ce que
les enroulements polyphasés (121, 221) de la même phase dans les rotors respectifs (12, 22) des premier et second moteurs (10, 20) sont reliés entre eux en série ou en parallèle, et en ce que des éléments à effet Hall (123) pour la détection des pôles magnétiques du flux magnétique transmis à partir des stators (11, 21), sont fixés à un seul des rotors (12, 22) des premier et second moteurs (10, 20).

2. Dispositif d'entraînement linéaire selon la revendication 1, caractérisé en ce que les enroulements polyphasés (121, 221) sont reliés en anneau pour former un ensemble.

3. Dispositif d'entraînement linéaire selon la revendication 1 ou 2, caractérisé en ce que les rotors (12, 22) sont librement déplaçables à travers un entrefer sur la surface supérieure des stators (11, 21).

4. Dispositif d'entraînement linéaire selon la revendication 1 ou 2, caractérisé en ce que les stators (11, 21) dans les premier et second moteurs linéaires (10, 20) sont disposés verticalement, en ce que les rotors (12, 22) sont disposés respectivement sur les deux parties d'extrémité de l'élément de liaison (30) et en ce qu'un élément de guidage (40') est prévu pour soutenir axialement l'élément de liaison (30) ou les rotors (12, 22).

Fig. 1

Fig. 2

Fig. 3

113    124    10    11

N S N S N S S N S N N S N S N S

moving direction

30

112

12    111

212

20

21

N S N S N S N S N S N S N S N S

22    211

111

12

112

121

30

221

212

211

22

## Fig. 4

## Fig. 5

## Fig. 6

## Fig. 7

Fig. 8

Fig. 9

Fig. 10

EP 0 343 655 B1

*Fig. 11*

moving direction

# *Fig. 12*